# EUROPEAN PATENT APPLICATION

(11) **EP 4 624 209 A1**
(43) Date of publication of application: **01.10.2025**
(21) Application number: 24851114.9
(22) Date of filing: 09.08.2024
(51) Int. Cl.: B60J 7/00

(54) **SUNSHADE MOVING PASSAGE, SUNROOF ASSEMBLY, AND VEHICLE**

(30) Priority: 10.08.2023 CN 202311004473
(71) Applicant: Fuyao Glass Industry Group Co., Ltd., Fuqing, Fujian 350300 (CN)
(72) Inventor: LING, Zhiwen, Village, Fuqing Fujian 350300 (CN); WANG, Zhixin, Village, Fuqing Fujian 350300 (CN); DING, Zhengzheng, Village, Fuqing Fujian 350300 (CN); CHEN, Jie, Village, Fuqing Fujian 350300 (CN); YU, Jianzhao, Village, Fuqing Fujian 350300 (CN); LIU, Xianping, Village, Fuqing Fujian 350300 (CN); XU, Jie, Village, Fuqing Fujian 350300 (CN)
(74) Representative: Mewburn Ellis LLP
(86) International application number: PCT/CN2024/110903
(87) International publication number: WO 2025/031470

(57) **Abstract**

The present disclosure relates to a canopy running channel, a sunroof assembly, and a vehicle. The canopy running channel includes a hollow tube and an end member. The hollow tube includes an outer tube and an inner tube. The end member includes a first end-member and a second end-member. Both one end of the outer tube and one end of the inner tube are connected to the first end-member, and the other end of the inner tube is connected to the second end-member. The end member is configured to be mounted on sunroof glass, the end member includes an upper member configured to be away from the sunroof glass and a lower member configured to be close to the sunroof glass, and a surface of the upper member configured to be away from the sunroof glass is an upper surface. The upper member defines a fitting hole in communication with the hollow tube, and the lower member has an extension portion configured to be mounted on the sunroof glass. The present disclosure has the following advantages. The hollow tube can be more accurately positioned during an injection-molding process and in an encapsulation, thereby avoiding abnormal noise in a running channel during the movement of a cable. Problems such as shaking, abnormal noise, and falling of the hollow tube are solved, and the assembly process of parts is simplified.

## Description

### CROSS-REFERENCE TO RELATED APPLICATION(S)

This application claims priority to and the benefit of Chinese Patent Application No. 202311004473.4, filed August 10, 2023 and entitled "CANOPY RUNNING CHANNEL, SUNROOF ASSEMBLY, AND VEHICLE", the entire disclosure of which is hereby incorporated by reference.

### TECHNICAL FIELD

This disclosure relates to the field of vehicle technology, and in particular to a canopy running channel, a sunroof assembly, and a vehicle.

### BACKGROUND

Nowadays, most sedans are equipped with sunroofs to facilitate better lighting. As an important part of the sunroof, a sunshade can move back and forth to adjust the exposure of sunlight to eyes to avoid accidents, have a good cooling effect, and can protect the dashboard and leather seats.

A method for setting a cable running channel of a sunshade is disclosed in both patent document 1: CN101428546A and patent document 2: CN204659413U. In patent document 1, the cable running channel is a nearly hollow tubular structure configured to be disposed on a plastic cross member, the cable running channel is composed of upper covers and lower covers that are staggered up and down, and each of the upper covers and the lower covers defines a hole. In patent document 2, a plastic cross member is provided with a left outer cable running channel and a right outer cable running channel that are wrapped by plastic tubes, as well as a left inner cable running channel and a right inner cable running channel that are wrapped by iron tubes. Each iron tube has scores to increase its bending performance. With the method in patent document 2, an existing method in which multiple metal tubes are concatenated into a cable running channel or an existing method in which two cable running channels are formed by multiple upper covers and multiple lower covers that are staggered up and down can be replaced.

Disadvantages of the above prior art are as follows: (1) the cable running channel is prone to swing and vibrate, causing abnormal noise, (2) the cable running channel has a large number of assembly parts, many processes, and poor positioning accuracy, and (3) the overall thickness of the sunroof, especially on the driver's side, occupies a lot of space, leaving insufficient headroom for passengers.

### SUMMARY

The present disclosure is to tackle problems mentioned in the background, and provides a canopy running channel, a sunroof assembly, and a vehicle.

In order to achieve the above technical purposes, technical solutions adopted in the present disclosure are as follows.

A canopy running channel includes a hollow tube and an end member, where the hollow tube includes an outer tube and an inner tube. The end member includes a first end-member and a second end-member. Both one end of the outer tube and one end of the inner tube are connected to the first end-member, and the other end of the inner tube is connected to the second end-member. The end member is configured to be mounted on sunroof glass, the end member includes an upper member configured to be away from the sunroof glass and a lower member configured to be close to the sunroof glass, and a surface of the upper member configured to be away from the sunroof glass is an upper surface. The upper member defines a fitting hole in communication with the hollow tube, and the lower member has an extension portion configured to be mounted on the sunroof glass.

In an embodiment, the extension portion is provided with a buffer portion configured to be connected to the sunroof glass.

In an embodiment, the upper member is provided with a first positioning portion on the upper surface of the upper member, and the first positioning portion is configured for positioning in a mold.

Preferably, the first positioning portion is a recess or a boss.

In an embodiment, the extension portion is further provided with a second positioning portion configured for positioning in the mold.

Preferably, the second positioning portion is a positioning hole.

Further, a material of the buffer portion is a thermoplastic elastomer (TPE) material.

In an embodiment, the upper member defines a mounting hole on the upper surface of the upper member, and a nut is provided in the mounting hole.

Preferably, the end member, the hollow tube, and the nut are integrally injection-molded.

Preferably, an interference amount between the buffer portion and the sunroof glass is *A,* and satisfies: 1 mm ≤ *A* ≤ 2 mm.

Meanwhile, the present disclosure further provides a sunroof assembly. The sunroof assembly includes sunroof glass, a motor mounting portion, two canopy running channels mentioned above, and two guiding rails. The motor mounting portion is mounted on the sunroof glass. The two canopy running channels are fixedly connected to the sunroof glass by injection-molding an encapsulation. One of the two canopy running channels is disposed at one end of the motor mounting portion, and the other of the two canopy running channels is disposed at the other end of the motor mounting portion. One end of each of the two guiding rails is aligned with one of two second end-members, and the two guiding rails are disposed in parallel. Each of the two guiding rails and each of the canopy running channels cooperatively define a tube for movement of a cable.

In an embodiment, a hollow tube is provided with multiple process clamping portions, the multiple process clamping portions are spaced apart from one another sequentially along an arrangement path of the hollow tube, and the multiple process clamping portions are exposed beyond the encapsulation.

Further, the hollow tube includes a first straight tube section connected to the motor mounting portion, a second straight tube section disposed in a guiding direction of the guiding rail, and a curved tube section for connecting the first straight tube section and the second straight tube section. At least one of the multiple process clamping portions is disposed in the first straight tube section, and at least one of the multiple process clamping portions is disposed in the curved tube section.

Preferably, the length of each of the multiple process clamping portions is B, and satisfies: 10 mm ≤ *B* ≤ 20 mm.

In an embodiment, a concentricity error between fitting holes of two first end-members in communication with outer tubes is ± 0.3 mm, and a concentricity error between fitting holes of the two first end-members in communication with inner tubes is ± 0.3 mm.

In an embodiment, a concentricity error between a fitting hole of each of the two second end-members and one of the two guiding rails close to the each of the two second end-members is ± 0.3 mm.

Further, the hollow tube is wrapped in the encapsulation, and a lower member is wrapped in the encapsulation.

Further, the other end of the outer tube is exposed beyond the encapsulation.

Meanwhile, the present disclosure further provides a vehicle. The vehicle includes a motor and the sunroof assembly mentioned above, where the motor is mounted at the motor mounting portion.

In an embodiment, the motor is locked to the motor mounting portion through cooperation between a nut of an end member and a bolt.

Compared with the prior art, the present disclosure has the following beneficial effects. A structural design of the hollow tube and the end member leads to more accurate positioning of the hollow tube during the injection-molding process and in the encapsulation, so that the concentricity requirement between the two first end-members and the concentricity requirement between a second end-member and a guiding rail close to the second end-member are ensured, thereby avoiding abnormal noise in the running channel during the movement of the cable. In addition, the hollow tube is integrated into a glass encapsulation. In this way, for one thing, problems such as shaking, abnormal noise, and falling of the hollow tube are solved, and the hollow tube is effectively fixed. For another thing, the plastic cross member in the prior art is eliminated, the assembly process of parts is simplified, the headroom becomes larger, and costs are optimized, thereby improving the market competitiveness.

### BRIEF DESCRIPTION OF THE DRAWINGS

FIG. 1 is a schematic structural diagram of a canopy running channel provided in an embodiment of the present disclosure.
FIG. 2 is a partially enlarged view of the canopy running channel at Circle C in FIG. 1.
FIG. 3 is a partially enlarged view of the canopy running channel at Circle D in FIG. 1.
FIG. 4 is a partially enlarged view of a connection between a first end-member and sunroof glass provided in an embodiment of the present disclosure.
FIG. 5 is a schematic structural diagram of a sunroof assembly provided in an embodiment of the present disclosure.
FIG. 6 is an enlarged cross-sectional view of the sunroof assembly in FIG. 5, taken along a line E-E.
FIG. 7 is an enlarged cross-sectional view of the sunroof assembly in FIG. 5, taken along a line F-F.

Reference signs: 10-canopy running channel, 11-hollow tube, 111-outer tube, 112-inner tube, 113-first straight tube section, 114-second straight tube section, 115-curved tube section, 12-end member, 121-first end-member, 122-second end-member, 123-upper member, 1230-upper surface, 1231-first positioning portion, 1232-mounting hole, 1233-nut, 124-lower member, 125-fitting hole, 126-extension portion, 1261-buffer portion, 1262-second positioning portion, 20-sunroof assembly, 21-sunroof glass, 22-motor mounting portion, 23-guiding rail, 24-encapsulation, 25-cable, 26-process clamping portion, A-interference amount between the buffer portion and the sunroof glass, and *B*-length of the process clamping portion.

### DETAILED DESCRIPTION

In order to make the above purposes, features, and advantages of the present disclosure more apparent and understandable, specific embodiments of the present disclosure are elaborated below in conjunction with accompanying drawings. Many specific details are set forth in the following description to facilitate a full understanding of the present disclosure. However, the present disclosure can be implemented in many other ways different from those described herein. Those skilled in the art can make similar modifications without departing from the connotation of the present disclosure, and the present disclosure is not limited by the specific embodiments disclosed below.

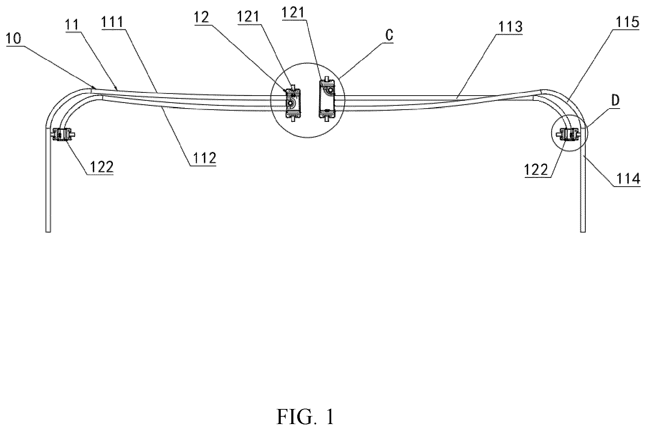

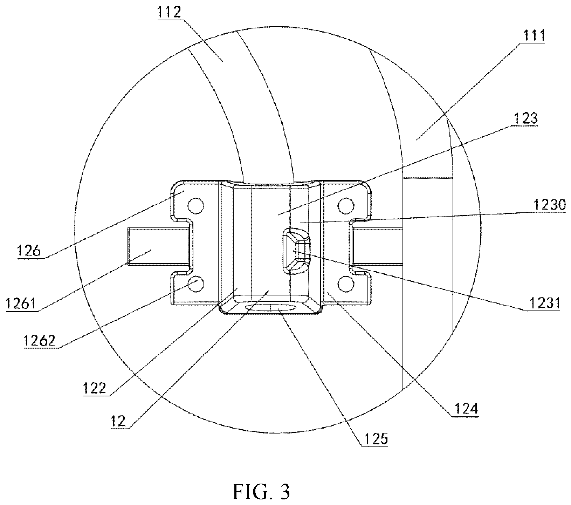

In some embodiments of the present disclosure, as illustrated in FIG. 1 to FIG. 4, a canopy running channel 10 includes a hollow tube 11 and an end member 12. The hollow tube 11 includes an outer tube 111 and an inner tube 112. The end member 12 includes a first end-member 121 and a second end-member 122. Both one end of the outer tube 111 and one end of the inner tube 112 are connected to the first end-member 121, and the other end of the inner tube 112 is connected to the second end-member 122. The end member 12 is configured to be mounted on sunroof glass 21, the end member 12 includes an upper member 123 configured to be away from the sunroof glass 21 and a lower member 124 configured to be close to the sunroof glass 21, and a surface of the upper member 123 configured to be away from the sunroof glass 21 is an upper surface 1230. The upper member 123 defines a fitting hole 125 in communication with the hollow tube 11, and the lower member 124 has an extension portion 126 configured to be mounted on the sunroof glass 21.

The inner tube 112 of the hollow tube 11 is configured for the movement of a cable 25, to drive a sunshade to be on or off, and the outer tube 111 of the hollow tube 11 is configured for the retraction of the cable 25. The end member 12 is configured for positioning in a mold. The hollow tube 11 is disposed in the fitting hole 125 of the upper member 123, the extension portion 126 of the lower member 124 is configured to be mounted on the sunroof glass 21, and there is a height difference between the upper member 123 and the lower member 124, so that the hollow tube 11 will not be in direct contact with the sunroof glass 21, thereby avoiding deformation and damage of the hollow tube 11.

In an embodiment, as illustrated in FIG. 1 to FIG. 4, the extension portion 126 is provided with a buffer portion 1261 configured to be connected to the sunroof glass 21. The buffer portion 1261 of the lower member 124 mainly acts as a buffer for the hollow tube 11 when an upper mold presses down, so that the hollow tube 11 will not be in direct contact with the sunroof glass 21, thereby avoiding deformation and damage of the hollow tube 11.

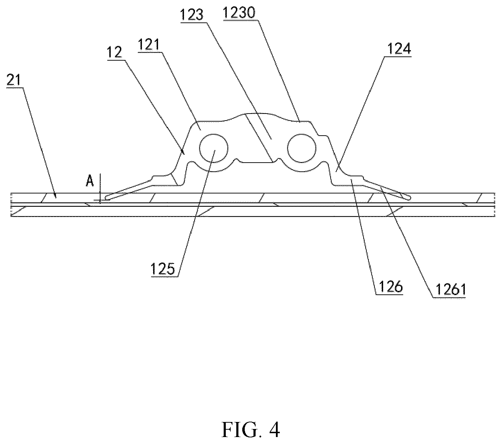

Preferably, as illustrated in FIG. 4, an interference amount between the buffer portion 1261 and the sunroof glass 21 is A, and satisfies: 1 mm ≤ *A* ≤ 2 mm.

It can be noted that the buffer portion 1261 in FIG. 4 has not yet been deformed. After the buffer portion 1261 is deformed, the buffer portion 1261 will not extend into the sunroof glass 21.

Further, a material of the buffer portion 1261 is a thermoplastic elastomer (TPE) material. The TPE has excellent properties such as high elasticity, aging resistance, and oil resistance, and is easy to be processed in various processing manners. With such a material, the buffer portion 1261 of the lower member 124 can be prevented from plastic deformation or fracture when subjected to a force.

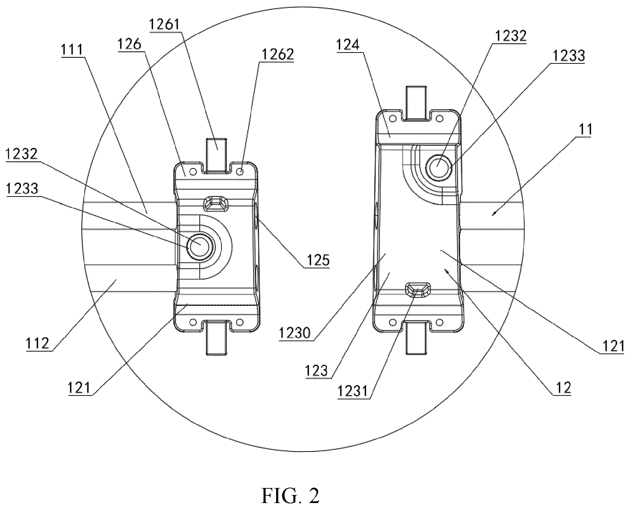

In an embodiment, as illustrated in FIG. 2 to FIG. 3, the upper member 123 is provided with a first positioning portion 1231 on the upper surface 1230 of the upper member 123, and the first positioning portion 1231 is configured for positioning in the mold.

The mold is provided with a first fitting portion, and the first fitting portion is configured to cooperate with the first positioning portion 1231. When the end member 12 is in contact with a surface of the mold, the first positioning portion 1231 and the first fitting portion cooperate with each other, so that the hollow tube 11 can be accurately positioned in the mold.

Preferably, the first positioning portion 1231 is a recess or a boss. When the first positioning portion 1231 is a recess, the first fitting portion is a boss fit with the recess. When the first positioning portion 1231 is a boss, the first fitting portion is a recess fit with the boss.

In an embodiment, as illustrated in FIG. 2 to FIG. 3, the extension portion 126 is further provided with a second positioning portion 1262 configured for positioning in the mold.

The mold is provided with a second fitting portion, and the second fitting portion is configured to cooperate with the second positioning portion 1262. When the end member 12 is in contact with the surface of the mold, the second positioning portion 1262 and the second fitting portion cooperate with each other, so that the hollow tube 11 can be accurately positioned in the mold.

Preferably, the second positioning portion 1262 is a positioning hole. In this case, the mold is provided with a positioning pin, and the positioning pin is configured to cooperate with the positioning hole. The end member 12 can be accurately positioned in the mold through cooperation between the positioning hole and the positioning pin. It can be noted that there may be one or more positioning holes, which is set according to actual positioning requirements.

In an embodiment, the upper member 123 defines a mounting hole 1232 on the upper surface 1230 of the upper member 123, and a nut 1233 is provided in the mounting hole 1232.

The mounting hole 1232 can be configured to cooperate with the positioning pin in the mold, to improve the positioning accuracy of the hollow tube 11 in the mold. The nut 1233 can be configured to cooperate with a bolt to lock a motor to a motor mounting portion 22.

Preferably, the end member 12, the hollow tube 11, and the nut 1233 are integrally injection-molded, thereby simplifying the manufacturing process and the assembly process.

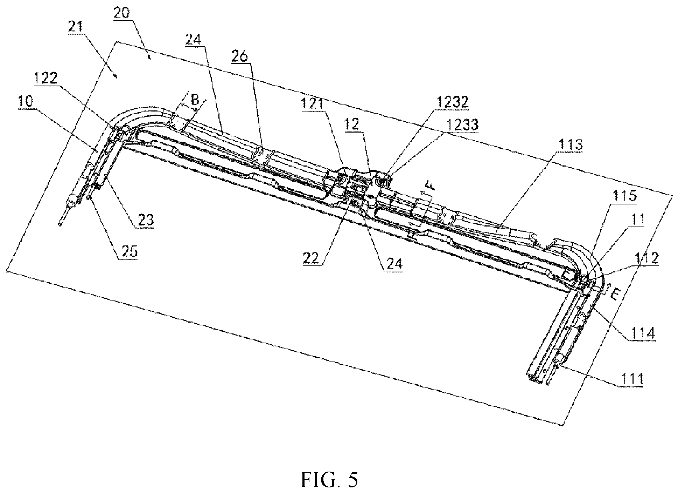

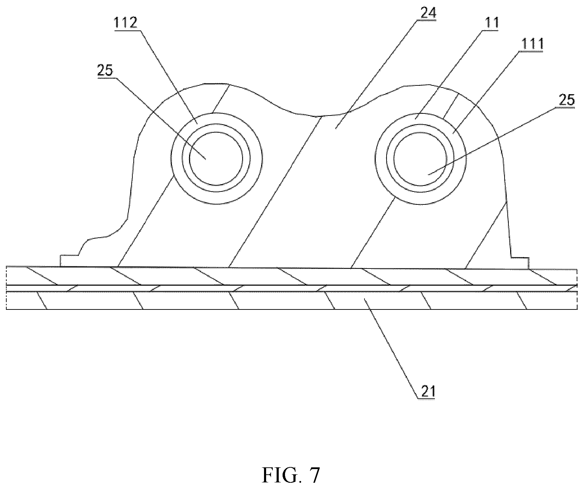

Further, in some embodiments of the present disclosure, as illustrated in FIG. 5 to FIG. 7, a sunroof assembly 20 is provided. The sunroof assembly 20 includes the sunroof glass 21, the motor mounting portion 22, two canopy running channels 10 mentioned above, and two guiding rails 23. The motor mounting portion 22 is mounted on the sunroof glass 21. The two canopy running channels 10 mentioned above are fixedly connected to the sunroof glass 21 by injection-molding an encapsulation 24. One of the two canopy running channels 10 is disposed at one end of the motor mounting portion 22, and the other of the two canopy running channels 10 is disposed at the other end of the motor mounting portion 22. One end of each of the two guiding rails 23 is aligned with one of two second end-members 122, and the two guiding rails 23 are disposed in parallel. Each of the two guiding rails 23 and each of the canopy running channels 10 cooperatively define a tube for the movement of the cable 25.

A structural design of the hollow tube 11 and the end member 12 in the canopy running channel 10 leads to more accurate positioning of the hollow tube 11 during the injection-molding process and in the encapsulation 24. In addition, the hollow tube 11 is integrated into a glass encapsulation 24. In this way, for one thing, problems such as shaking, abnormal noise, and falling of the hollow tube 11 are solved, and the hollow tube 11 is effectively fixed. For another thing, the plastic cross member in the prior art is eliminated, the assembly process of parts is simplified, the headroom becomes larger, and costs are optimized, thereby improving the market competitiveness.

In this embodiment, a material of the sunroof glass 21 is not limited, and is usually inorganic glass or organic glass, or a composite material. A material of the guiding rail 23 is not limited, and is usually plastic or metal. A material of the encapsulation 24 is not limited, and is usually polyvinyl chloride (PVC), TPE, ethylene propylene diene monomer (EPDM), or polyurethane (PU), etc.

In an embodiment, as illustrated in FIG. 5, the hollow tube 11 is provided with multiple process clamping portions 26, the multiple process clamping portions 26 are spaced apart from one another sequentially along an arrangement path of the hollow tube 11, and the multiple process clamping portions 26 are exposed beyond the encapsulation 24.

When the encapsulation 24 is injection-molded, each process clamping portion 26 can be clamped and cooperated with a clamping claw (not illustrated in the figure) to adjust the direction of the hollow tube 11. Since the clamping claw (not illustrated in the figure) can be removed from the hollow tube 11 after the encapsulation 24 is injection-molded, the process clamping portion 26 is exposed to an outside of the encapsulation 24.

Further, the hollow tube 11 includes a first straight tube section 113 connected to the motor mounting portion 22, a second straight tube section 114 disposed in a guiding direction of the guiding rail 23, and a curved tube section 115 for connecting the first straight tube section 113 and the second straight tube section 114. At least one of the multiple process clamping portions 26 is disposed in the first straight tube section 113, and at least one of the multiple process clamping portions 26 is disposed in the curved tube section 115.

At least one of the process clamping portions 26 is disposed in the first straight tube section 113, so that the stability of the first straight tube section 113 can be ensured, the accuracy of axial positioning between fitting holes 125 of two first end-members 121 in communication with outer tubes 111 can be improved, and the accuracy of axial positioning between fitting holes 125 of the two first end-members 121 in communication with inner tubes 112 can be improved. At least one of the process clamping portions 26 is disposed in the curved tube section 115, so that the hollow tube 11 can form a stable bending arc.

It can be noted that the process clamping portion 26 can also be set in the second straight tube section 114. In this way, the process clamping portion 26 set in the second straight tube section 114 can be used to ensure the stability of the second straight tube section 114, thereby improving the accuracy of axial positioning between each of the two second end-members 122 and one of the two guiding rails 23 close to the each of the two second end-members 122.

Preferably, the length of each of the multiple process clamping portions 26 is B, and satisfies: 10 mm ≤ *B* ≤ 20 mm, for example, 10 mm, 12 mm, 14 mm, 16 mm, 18 mm, 20 mm, etc.

In an embodiment, a concentricity error between the fitting holes 125 of the two first end-members 121 in communication with the outer tubes 111 is ± 0.3 mm, and a concentricity error between the fitting holes of the two first end-members 121 in communication with the inner tubes 112 is ± 0.3 mm. In this case, abnormal noise will not occur when the cable 25 slides at transition positions of the two first end-members 121.

In an embodiment, a concentricity error between a fitting hole 125 of each of the two second end-members 122 and one of the two guiding rails 23 close to the each of the two second end-members 122 is ± 0.3 mm. In this case, abnormal noise will not occur when the cable 25 slides at a transition position between the each of the two second end-members 122 and the one of the two guiding rails 23 close to the each of the two second end-members 122.

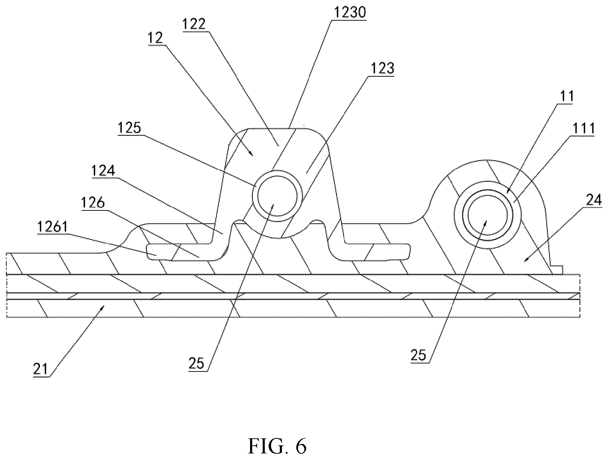

Further, as illustrated in FIG. 6 to FIG. 7, the hollow tube 11 is wrapped in the encapsulation 24, and the lower member 124 is wrapped in the encapsulation 24. The hollow tube 11 and the lower member 124 of the end member 12 are connected to the sunroof glass 21 via the encapsulation 24, as such, a large plastic cross member in the prior art is eliminated, the assembly process of parts is simplified, the headroom becomes larger, and costs are optimized.

Further, as illustrated in FIG. 5, the other end of the outer tube 111 is exposed beyond the encapsulation 24.

In some embodiments of the present disclosure, a vehicle is provided. The vehicle includes a motor (not illustrated in the figure) and the sunroof assembly 20, where the motor (not illustrated in the figure) is mounted at the motor mounting portion 22.

A structural design of the hollow tube 11 and the end member 12 in the vehicle leads to more accurate positioning of the hollow tube 11 during the injection-molding process and in the encapsulation 24, so that the concentricity requirement between the two first end-members 121 and the concentricity requirement between a second end-member 122 and a guiding rail 23 close to the second end-member 122 are ensured, thereby avoiding abnormal noise in the running channel during the movement of the cable 25. In addition, the hollow tube 11 is integrated into the glass encapsulation 24. In this way, for one thing, problems such as shaking, abnormal noise, and falling of the hollow tube 11 are solved, and the hollow tube 11 is effectively fixed. For another thing, the plastic cross member in the prior art is eliminated, the assembly process of parts is simplified, the headroom becomes larger, and costs are optimized, thereby improving the market competitiveness.

In an embodiment, the motor (not illustrated in the figure) is locked to the motor mounting portion 22 through cooperation between the nut 1233 of the end member 12 and a bolt (not illustrated in the figure).

It can be noted that the encapsulation 24 can further be provided with a nut disposed between nuts 1233 of the two end members 12. The nut and the nuts 1233 of the two end members 12 are cooperatively configured to cooperate with bolts (not illustrated in the figure) to lock the motor (not illustrated in the figure) to the motor mounting portion 22.

It can be noted that in the present disclosure, if the sunroof glass 21 is the inorganic glass, examples thereof include soda-lime glass (also referred to as "soda-lime-silicate glass"), aluminosilicate glass, borate glass, borosilicate glass, lithium aluminosilicate glass, alkali-free glass, quartz glass, etc. The soda-lime glass is particularly preferable. From the perspective of strength improvement, the inorganic glass can also be tempered glass, and the tempered glass can be any one of chemically tempered glass and physically tempered glass.

If the sunroof glass 21 is the organic glass (resin), examples thereof include a polycarbonate resin, a polystyrene resin, an aromatic polyester resin, an acrylic resin, a polyester resin, a polyarylate resin, a polycondensate of halogenated bisphenol A and ethylene glycol, an acrylic urethane resin, a halogenated aryl group-containing acrylic resin, etc. The polycarbonate resin such as an aromatic polycarbonate resin and the acrylic resin such as a polymethyl methacrylate-based acrylic resin are preferable, the polycarbonate resin is more preferable, and a bisphenol A-based polycarbonate resin is particularly preferable. In addition, two or more kinds of the above resins may be used in combination.

The technical features of the embodiments can be combined arbitrarily, and not all possible combinations of the technical features of the embodiments have been described for the sake of simplicity. However, as long as there is no contradiction between the combinations of these technical features, it can be considered that the combinations fall within the scope of the specification.

The embodiments only illustrate several embodiments of the present disclosure, and the description is relatively specific and detailed. However, this cannot be understood as a limitation to the scope of the present disclosure. It can be noted that, for those of ordinary skilled in the art, a number of variations and modifications can be made without departing from the concept of the present disclosure, and all of those variations and modifications fall within the scope of protection of the present disclosure. Therefore, the scope of protection of the present disclosure shall be subject to the claims.

In addition, the terms "first" and "second" are only intended for illustrative purposes, rather than being construed as indicating or implying relative importance or implicitly designating the number of the technical features as indicated. Thus, the features defined by "first" and "second" may explicitly or implicitly include at least one of the features. In the description of the present disclosure, "a plurality of" or "multiple" means two or more than two, such as two, three, etc., unless stated otherwise.

In the present disclosure, unless stated or limited otherwise, the terms "mounted", "connected", "coupled", "fixed", or the like are used broadly, and may be, for example, fixed connections, detachable connections (such as connections with bolts and screws), or integral connections (such as riveting, welding); may also be mechanical or electrical connections or communicable with each other; may also be direct connections or indirect connections via intervening structures; may also be inner communications or interaction relationship of two elements, unless limited otherwise, which can be understood by those skilled in the art according to specific situations.

In addition, unless stated otherwise, the terms used to express a positional relationship or shape in any technical solution provided in the present disclosure include states or shapes that are approximate, similar, or close to the positional relationship or shape.

Any component provided in the present disclosure can be assembled by multiple independent constituent parts, or can be an independent component manufactured through an integrated molding process.

In the present disclosure, unless stated or limited otherwise, a first feature, when being referred to as being located "above" or "below" a second feature, may be in direct contact with the second feature, or in indirect contact with the second feature via an intermediate feature. The terms "vertical", "horizontal", "up", "down", "left", "right", and similar expressions used herein are only for the purpose of illustration, rather than presenting the only embodiment.

## Claims

1. A canopy running channel, comprising a hollow tube and an end member, wherein the hollow tube comprises an outer tube and an inner tube, the end member comprises a first end-member and a second end-member, both one end of the outer tube and one end of the inner tube are connected to the first end-member, and the other end of the inner tube is connected to the second end-member; the end member is configured to be mounted on sunroof glass, the end member comprises an upper member configured to be away from the sunroof glass and a lower member configured to be close to the sunroof glass, and a surface of the upper member configured to be away from the sunroof glass is an upper surface; and the upper member defines a fitting hole in communication with the hollow tube, and the lower member has an extension portion configured to be mounted on the sunroof glass.

2. The canopy running channel of claim 1, wherein the extension portion is provided with a buffer portion configured to be connected to the sunroof glass.

3. The canopy running channel of claim 1, wherein the upper member is provided with a first positioning portion on the upper surface of the upper member, and the first positioning portion is configured for positioning in a mold.

4. The canopy running channel of claim 3, wherein the first positioning portion is a recess or a boss.

5. The canopy running channel of claim 1, wherein the extension portion is further provided with a second positioning portion configured for positioning in a mold.

6. The canopy running channel of claim 5, wherein the second positioning portion is a positioning hole.

7. The canopy running channel of claim 2, wherein a material of the buffer portion is a thermoplastic elastomer (TPE) material.

8. The canopy running channel of claim 1, wherein the upper member defines a mounting hole on the upper surface of the upper member, and a nut is provided in the mounting hole.

9. The canopy running channel of claim 8, wherein the end member, the hollow tube, and the nut are integrally injection-molded.

10. The canopy running channel of claim 2, wherein an interference amount between the buffer portion and the sunroof glass is *A,* and satisfies: 1 mm *≤ A* ≤ 2 mm.

11. A sunroof assembly, comprising:
sunroof glass;
a motor mounting portion mounted on the sunroof glass;
two canopy running channels of any one of claims 1 to 10, wherein the two canopy running channels are fixedly connected to the sunroof glass by injection-molding an encapsulation, one of the two canopy running channels is disposed at one end of the motor mounting portion, and the other of the two canopy running channels is disposed at the other end of the motor mounting portion; and
two guiding rails, wherein one end of each of the two guiding rails is aligned with one of two second end-members, the two guiding rails are disposed in parallel, and each of the two guiding rails and each of the canopy running channels cooperatively define a tube for movement of a cable.

12. The sunroof assembly of claim 11, wherein a hollow tube is provided with a plurality of process clamping portions, the plurality of process clamping portions are spaced apart from one another sequentially along an arrangement path of the hollow tube, and the plurality of process clamping portions are exposed beyond the encapsulation.

13. The sunroof assembly of claim 12, wherein the hollow tube comprises a first straight tube section connected to the motor mounting portion, a second straight tube section disposed in a guiding direction of the guiding rail, and a curved tube section for connecting the first straight tube section and the second straight tube section, at least one of the plurality of process clamping portions is disposed in the first straight tube section, and at least one of the plurality of process clamping portions is disposed in the curved tube section.

14. The sunroof assembly of claim 12, wherein a length of each of the plurality of process clamping portions is *B,* and satisfies: 10 mm ≤ *B* ≤ 20 mm.

15. The sunroof assembly of claim 11, wherein a concentricity error between fitting holes of two first end-members in communication with outer tubes is ± 0.3 mm, and a concentricity error between fitting holes of the two first end-members in communication with inner tubes is ± 0.3 mm.

16. The sunroof assembly of claim 11, wherein a concentricity error between a fitting hole of each of the two second end-members and one of the two guiding rails close to the each of the two second end-members is ± 0.3 mm.

17. The sunroof assembly of claim 11, wherein a hollow tube is wrapped in the encapsulation, and a lower member is wrapped in the encapsulation.

18. The sunroof assembly of claim 11, wherein the other end of an outer tube is exposed beyond the encapsulation.

19. A vehicle, comprising a motor and the sunroof assembly of any one of claims 11 to 18, wherein the motor is mounted at the motor mounting portion.

20. The vehicle of claim 19, wherein the motor is locked to the motor mounting portion through cooperation between a nut of an end member and a bolt.
